(19) Europäisches Patentamt
European Patent Office
Office européen des brevets

(11) **EP 1 315 317 A2**

(12) **EUROPEAN PATENT APPLICATION**

(43) Date of publication:
**28.05.2003 Bulletin 2003/22**

(51) Int Cl.$^7$: **H04B 10/08**

(21) Application number: **02025402.5**

(22) Date of filing: **14.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **21.11.2001 JP 2001356478**

(71) Applicant: **MITSUBISHI DENKI KABUSHIKI KAISHA**
**Tokyo 100-8310 (JP)**

(72) Inventor: **Hoshide, Takahiro**
**Chiyoda-ku, Tokyo 100-8310 (JP)**

(74) Representative: **Pfenning, Meinig & Partner GbR**
**Mozartstrasse 17**
**80336 München (DE)**

(54) **Apparatus for detecting cutoff of optical signal, optical receiver, optical transmitter, and corresponding method**

(57)    An apparatus for detecting cutoff of an optical signal includes an optical power monitoring circuit (11) for producing an output voltage corresponding to power of an input optical signal, a threshold voltage setting circuit (12) for setting a threshold voltage Vth corresponding to the power of the input optical signal so that the threshold voltage Vth is lower than the output voltage produced by the optical power monitoring circuit (11) during receiving the optical signal, the threshold voltage setting circuit (12) having a time constant larger than that of the optical power monitoring circuit (11), and a comparing circuit (13) for comparing the output voltage produced by the optical power monitoring circuit (11) with the threshold voltage Vth set by the threshold voltage setting circuit (12) and for outputting an optical cutoff alarm signal indicating a cutoff of the optical signal according to a comparison result.

FIG.1

EP 1 315 317 A2

# Description

BACKGROUND OF THE INVENTION

Field of the Invention

The present invention relates to an apparatus for detecting cutoff of an optical signal, an optical receiver, an optical transmitter, and a method of detecting cutoff of an optical signal, capable of outputting an optical cutoff alarm signal indicating a cutoff of an optical signal to be transmitted.

Description of Related Art

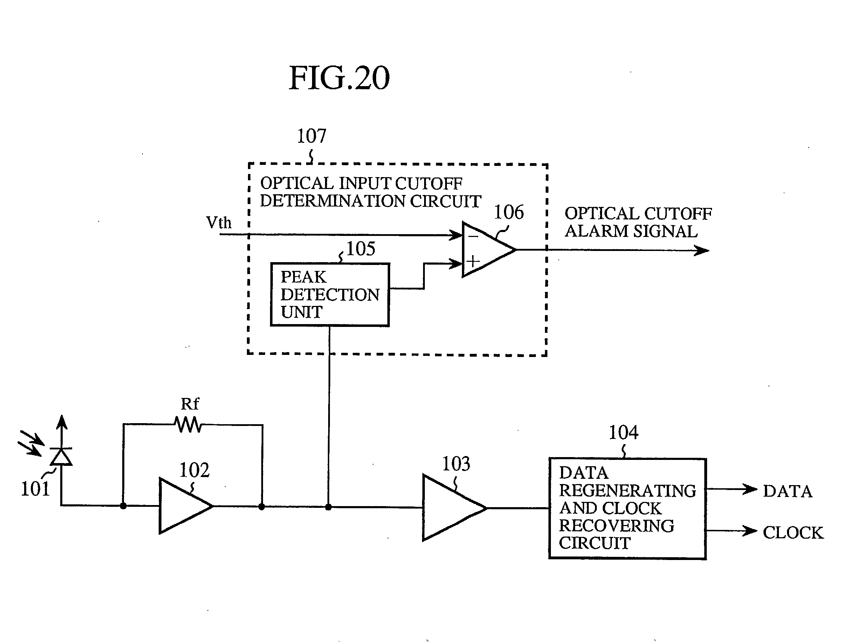

Fig. 20 is a block diagram showing the structure of a prior art optical receiver disclosed in Japanese patent application publication(TOKKAIHEI)No. 11-284572. In the figure, reference numeral 101 denotes a photodiode for accepting an optical signal and for converting it into a current signal, reference numeral 102 denotes a preamplifier for converting the current signal which flows through the photodiode 101 into a voltage signal, reference numeral 103 denotes a main amplifier for amplifying the voltage signal from the preamplifier 102, and reference numeral 104 denotes a data and clock recovery circuit for identifying data carried by the voltage signal from the main amplifier 103 so as to regenerate the data, and for recovering a clock from the voltage signal.

Furthermore, in Fig. 20, reference numeral 105 denotes a peak detection unit for detecting the amplitude of the voltage signal from the preamplifier 102, reference numeral 106 denotes a comparing circuit for comparing the voltage detected by the peak detection unit 105 with a predetermined threshold voltage Vth, and for outputting an optical cutoff alarm signal when the voltage detected by peak detection unit 105 is lower than the threshold voltage Vth, and reference numeral 107 denotes an optical input cutoff determination circuit which consists of the peak detection unit 105 and the comparing circuit 106. This optical cutoff alarm signal is used to notify of a failure of an optical transmission path, such as a break in an optical fiber.

Next, a description will be made as to the operation of the prior art optical receiver. An input optical signal is converted into a current signal by the photodiode 101, and the current signal is converted into a voltage signal by the preamplifier 102. The amplitude of the voltage signal is proportional to the power of the input optical signal. In other words, as the power of the input optical signal increases, the amplitude of the output of the preamplifier 102 increases proportionately, whereas as the power of the input optical signal decreases, the amplitude of the output of the preamplifier 102 decreases proportionately.

The main amplifier 103 amplifies the voltage signal from the preamplifier 102. The data and clock recovery circuit 104 identifies data carried by the voltage signal from the main amplifier 103 so as to regenerate the data and recovers a clock from the voltage signal.

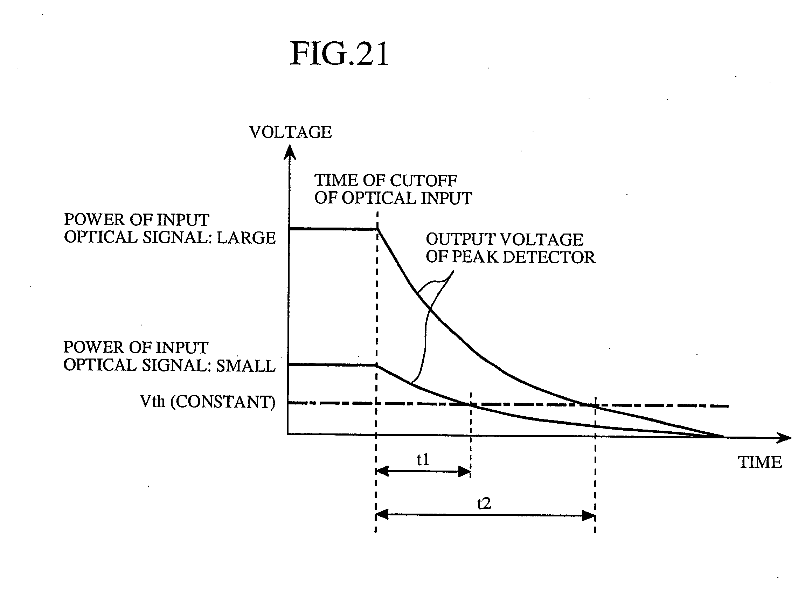

The peak detection unit 105 detects a peak of the amplitude of the output of the preamplifier 102. Fig. 21 is a diagram showing the output voltage characteristics of the peak detection unit after the optical input has been cut off. As shown in Fig. 21, as the power of the input optical signal increases, the output voltage from the peak detection unit 105 increases, whereas as the power of the input optical signal decreases, the output voltage from the peak detection unit 105 decreases.

After light input to the photodiode 101 has been cut off, the output voltage from the peak detection unit 105 decreases with a time constant determined by the photodiode 101, the preamplifier 102, and the peak detection unit 105. The comparing circuit 106 compares the output voltage from the peak detection unit 105 with a predetermined threshold voltage Vth, and then outputs an optical cutoff alarm signal when the voltage detected by the peak detection unit 105 is lower than the threshold voltage Vth.

In this case, as shown in Fig. 21, because the output voltage of the peak detection unit 105 is low before the optical input has been cut off when the power of the input optical signal is small, the length of time: t1 required for the output voltage of the peak detection unit 105 to decrease to the threshold voltage Vth is short, and therefore the comparing circuit 106 can output an optical cutoff alarm signal in a short time. On the other hand, because the output voltage of the peak detection unit 105 is high before the optical input has been cut off when the power of the input optical signal is large, the length of time: t2 required for the output voltage of the peak detection unit 105 to decrease to the threshold voltage Vth is long, and therefore the comparing circuit 106 cannot output an optical cutoff alarm signal in a short time.

The holding of the output voltage of the peak detection unit 105 is caused by parasitic capacitors provided by a capacitor and a light receiving element which constitute the peak detection unit 105. Furthermore, a transmission loss and so on caused by switching between optical transmission paths can cause a change in the input optical power.

A problem with a prior art optical receiver constructed as mentioned above is that the time that elapses until an optical cutoff alarm signal is output varies according to the power of an input optical signal and becomes long at the time of a cutoff of the input optical signal in a case where the power of the input optical signal is large, so that the prior art optical receiver is not applicable to a communication system in which limitations are imposed on variations in the time that elapses until an optical cutoff alarm signal is output after the input optical signal has been cut off, and a communication system in which quick responsivity is needed when outputting an optical cutoff alarm signal.

A prior art optical- signal input cutoff detector, as disclosed, as an embodiment of the invention, in Japanese patent application publication No. 11-284572, that, by setting a threshold voltage Vth corresponding to the level of noise produced by a photodiode and a preamplifier, can surely detect a cutoff of an input optical signal even if the level of noise produced by the photodiode and the preamplifier changes similarly suffers from the same problem.

SUMMARY OF THE INVENTION

The present invention is proposed to solve the above-mentioned problems, and it is therefore an object of the present invention to provide an apparatus for detecting cutoff of an optical signal, an optical receiver, an optical transmitter, and a method of detecting cutoff of an optical signal, in which the time that elapses until an optical cutoff alarm signal is output does not vary according to the power of an input optical signal and is maintained constant, and is short even when the power of the input optical signal is large, and which are applicable to a communication system in which limitations are imposed on variations in the time that elapses until an optical cutoff alarm signal is output after the input optical signal has been cut off, and a communication system in which quick responsivity is required when outputting an optical cutoff alarm signal.

In accordance with an aspect of the present invention, there is provided an apparatus for detecting cutoff of an optical signal including: a threshold voltage setting circuit for setting a threshold voltage corresponding to power of an input optical signal so that the threshold voltage during receiving the optical signal is lower than an output voltage produced by an optical power monitoring circuit during receiving the optical signal, the threshold voltage setting circuit having a time constant larger than that of the optical power monitoring circuit; and a comparing circuit for comparing the output voltage produced by the optical power monitoring circuit with the threshold voltage set by the threshold voltage setting circuit and for outputting an optical cutoff alarm signal indicating a cutoff of the input optical signal according to a comparison result.

In accordance with another aspect of the present invention, there is provided an optical receiver including: a threshold voltage setting circuit for setting a threshold voltage corresponding to power of an input optical signal so that the threshold voltage during receiving the optical signal is lower than an output voltage produced by an optical power monitoring circuit during receiving the optical signal, the threshold voltage setting circuit having a time constant larger than that of the optical power monitoring circuit; a comparing circuit for comparing the output voltage produced by the optical power monitoring circuit with the threshold voltage set by the threshold voltage setting circuit and for outputting an optical cutoff alarm signal indicating a cutoff of the input optical signal; and a data and clock recovery circuit for identifying data carried by the optical signal so as to regenerate the data and for recovering a clock from the optical signal.

In accordance with a further aspect of the present invention, there is provided an optical transmitter including: an optical power monitoring circuit for accepting an optical signal from a light emitting element and for producing an output voltage corresponding to power of the optical signal; a threshold voltage setting circuit for accepting the optical signal from the light emitting element and for producing a threshold voltage corresponding to the power of the optical signal and being lower than the output voltage produced by the optical power monitoring circuit during receiving the optical signal, the threshold voltage setting circuit having a time constant larger than that of the optical power monitoring circuit; and a comparing circuit for comparing the output voltage produced by the optical power monitoring circuit with the threshold voltage set by the threshold voltage setting circuit and for outputting an optical cutoff alarm signal indicating a cutoff of the optical signal according to a comparison result.

In accordance with another aspect of the present invention, there is provided a method of detecting cutoff of an optical signal, the method having the steps of: providing a threshold voltage setting circuit having a time constant larger than that of an optical power monitoring circuit; by using the threshold voltage setting circuit, setting a threshold voltage corresponding to power of an input optical signal during receiving the optical signal so that the threshold voltage is lower than an output voltage produced by using an optical power monitoring circuit during receiving the optical signal; comparing the output voltage produced by using the optical power monitoring circuit with the threshold voltage set by using the threshold voltage setting circuit; and outputting an optical cutoff alarm signal indicating a cutoff of the optical signal according to a comparison result obtained in the comparing step.

As a result, in accordance with the present invention, the time that elapses until an optical cutoff alarm is output after a cutoff of the optical input does not vary according to the power of the input optical signal and is maintained constant. Furthermore, the time that elapses until an optical cutoff alarm is output after the cutoff of the optical input is short even when the power of the input optical signal is large. Thus the apparatus for detecting cutoff of an optical signal, the optical receiver, the optical transmitter, and the method of detecting cutoff of an optical signal in accordance with the present invention are applicable to a communication system in which limitations are imposed on variations in the time that elapses until an optical cutoff alarm is output after the cutoff of the optical input, and a communication system in which quick responsivity is required when outputting an optical cutoff alarm signal.

Further objects and advantages of the present invention will be apparent from the following description of the preferred embodiments of the invention as illustrated in the accompanying drawings.

BRIEF DESCRIPTION OF THE DRAWINGS

Fig. 1 is a block diagram showing the structure of an optical receiver including an apparatus for detecting cutoff of an optical signal according to embodiment 1 of the present invention;

Fig. 2 is a diagram showing input and output characteristics of a light receiving element of the apparatus for detecting cutoff of an optical signal according to embodiment 1 of the present invention;

Fig. 3 is a diagram showing output characteristics of a preamplifier of the apparatus for detecting cutoff of an optical signal according to embodiment 1 of the present invention;

Fig. 4 is a diagram for explaining the structure and operation of a peak detecting circuit of the apparatus for detecting cutoff of an optical signal according to embodiment 1 of the present invention;

Fig. 5 is a diagram showing the structure of a voltage holding circuit of the apparatus for detecting cutoff of an optical signal according to embodiment 1 of the present invention;

Fig. 6 is a diagram showing output voltage characteristics and threshold voltage characteristics of an optical power monitoring circuit of the apparatus for detecting cutoff of an optical signal according to embodiment 1 of the present invention after an optical input has been cut off;

Fig. 7 is a block diagram showing the structure of an optical receiver including a variant of the apparatus for detecting cutoff of an optical signal according to embodiment 1 of the present invention;

Fig. 8 is a block diagram showing the structure of an optical receiver including another variant of the apparatus for detecting cutoff of an optical signal according to embodiment 1 of the present invention;

Fig. 9 is a block diagram showing the structure of an optical receiver including another variant of the apparatus for detecting cutoff of an optical signal according to embodiment 1 of the present invention;

Fig. 10 is a block diagram showing the structure of an optical receiver including another variant of the apparatus for detecting cutoff of an optical signal according to embodiment 1 of the present invention;

Fig. 11 is a block diagram showing the structure of an optical receiver including another variant of the apparatus for detecting cutoff of an optical signal according to embodiment 1 of the present invention;

Fig. 12 is a block diagram showing the structure of an optical receiver including another variant of the apparatus for detecting cutoff of an optical signal according to embodiment 1 of the present invention;

Fig. 13 is a block diagram showing the structure of an optical receiver including another variant of the apparatus for detecting cutoff of an optical signal according to embodiment 1 of the present invention;

Fig. 14 is a block diagram the structure of an optical receiver including another variant of the apparatus for detecting cutoff of an optical signal according to embodiment 1 of the present invention;

Fig. 15 is a block diagram showing the structure of an optical receiver including an apparatus for detecting cutoff of an optical signal according to embodiment 2 of the present invention;

Figs. 16A and 16B are diagrams showing the input and output characteristics of a preamplifier and a current detecting circuit of the apparatus for detecting cutoff of an optical signal according to embodiment 2 of the present invention;

Fig. 17 is a block diagram showing the structure of an optical receiver including an apparatus for detecting cutoff of an optical signal according to embodiment 3 of the present invention;

Fig. 18 is a block diagram showing the structure of an optical receiver including an apparatus for detecting cutoff of an optical signal according to embodiment 4 of the present invention;

Fig. 19 is a block diagram showing the structure of an optical transmitter including an apparatus for detecting cutoff of an optical signal according to embodiment 5 of the present invention;

Fig. 20 is a block diagram showing the structure of a prior art optical receiver; and

Fig. 21 is a diagram showing output voltage characteristics of a peak detection unit of the prior art optical receiver after an optical input has been cut off.

DETAILED DESCRIPTION OF THE PREFERRED EMBODIMENTS

The invention will now be described with reference to the accompanying drawings.

Embodiment 1.

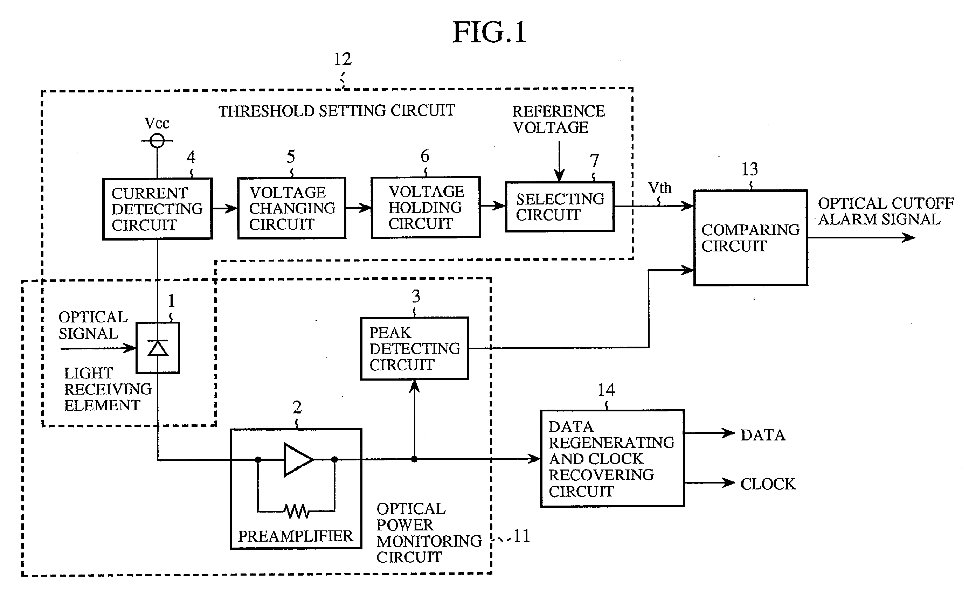

Fig. 1 is a block diagram showing the structure of an optical receiver including an apparatus for detecting cutoff of an optical signal according to embodiment 1 of the present invention. In the figure, reference numeral 1 denotes a light receiving element for accepting an optical signal and for converting it into a current signal, reference numeral 2 denotes a preamplifier for converting the current signal which flows in the light receiving element 1 into a voltage signal, and reference numeral 3 denotes a peak detecting circuit for detecting the amplitude of the voltage signal from the preamplifier 2.

Furthermore, in Fig. 1, reference numeral 4 denotes a current detecting circuit for detecting an average level of the current which flows in the light receiving element 1 and for converting the mean value into a voltage, reference numeral 5 denotes a voltage transformation circuit for converting the voltage output from the current detecting circuit 4 during receiving the optical signal into a voltage lower than the output voltage of the peak detecting circuit 3 during receiving the optical signal, reference numeral 6 denotes a voltage holding circuit for holding the output voltage from the voltage transformation circuit 5 during only a time period determined by a predetermined time constant thereof, and reference numeral 7 denotes a selecting circuit for selecting a higher one from the output voltage from the holding circuit 6 and a predetermined minimum reference voltage, and for outputting the selected voltage as a threshold voltage Vth.

In addition, in Fig. 1, reference numeral 11 denotes an optical power monitoring circuit provided with the light receiving element 1, the preamplifier 2, and the peak detecting circuit 3, reference numeral 12 denotes a threshold setting circuit provided with the light receiving element 1, the current detecting circuit 4, the voltage transformation circuit 5, the voltage holding circuit 6, and the selecting circuit 7, and reference numeral 13 denotes a comparing circuit for comparing an output voltage of the optical power monitoring circuit 11 with the threshold voltage Vth from the threshold setting circuit 12, and for outputting an optical cutoff alarm signal when the output voltage of the optical power monitoring circuit 11 is lower than the threshold voltage Vth. In the case of Fig. 1, the comparing circuit compares the voltage detected by the peak detecting circuit 3 with the threshold voltage Vth from the selecting circuit 7 and outputs an optical cutoff alarm signal when the voltage detected by the peak detecting circuit 3 is lower than the threshold voltage Vth. In addition, reference numeral 14 denotes a data and clock recovery circuit for identifying data carried by the voltage signal from the preamplifier 2 so as to regenerate the data, and for recovering a clock from the voltage signal.

Fig. 1 shows the structure of the optical receiver, in which the apparatus for detecting cutoff of an optical signal is comprised of the optical power monitoring circuit 11, the threshold setting circuit 12, and the comparing circuits 13 except the data and clock recovery circuit 14.

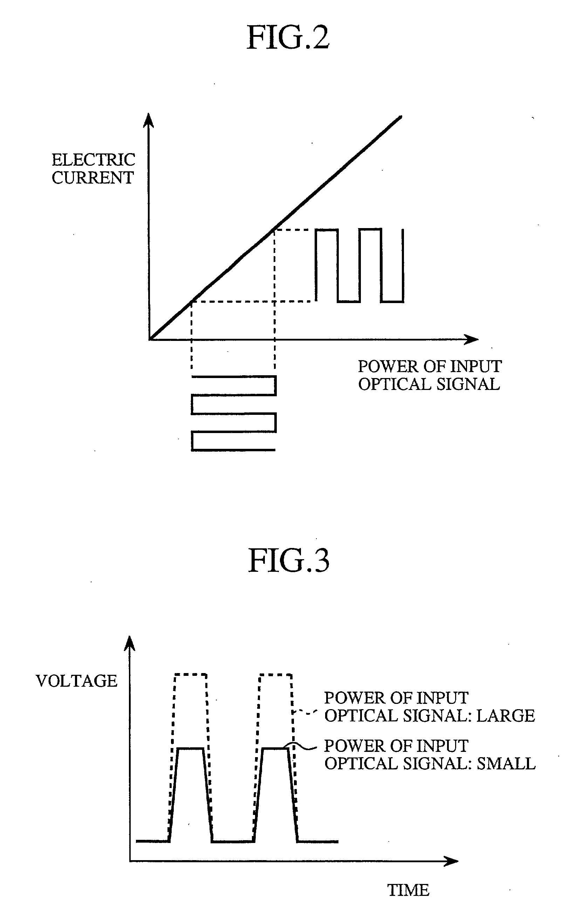

Next, a description will be made as to the operation of the optical receiver according to embodiment 1 of the present invention. The light receiving element 1 converts an input optical signal into a current signal. Fig. 2 is a diagram showing the input and output characteristics of the light receiving element, and an optical signal carrying data having 0s and 1s is converted into a current signal according to the input and output characteristics as shown in Fig. 2.

The preamplifier 2 converts the current signal from the light receiving element 1 into a voltage signal. Fig. 3 is a diagram showing the output characteristics of the preamplifier. The amplitude of the output of the preamplifier 2 is proportional to the power of the input optical signal. In other words, as the power of the input optical signal increases, the amplitude of the output of the preamplifier 2 increases proportionately, whereas as the power of the input optical signal decreases, the amplitude of the output of the preamplifier 2 decreases proportionately.

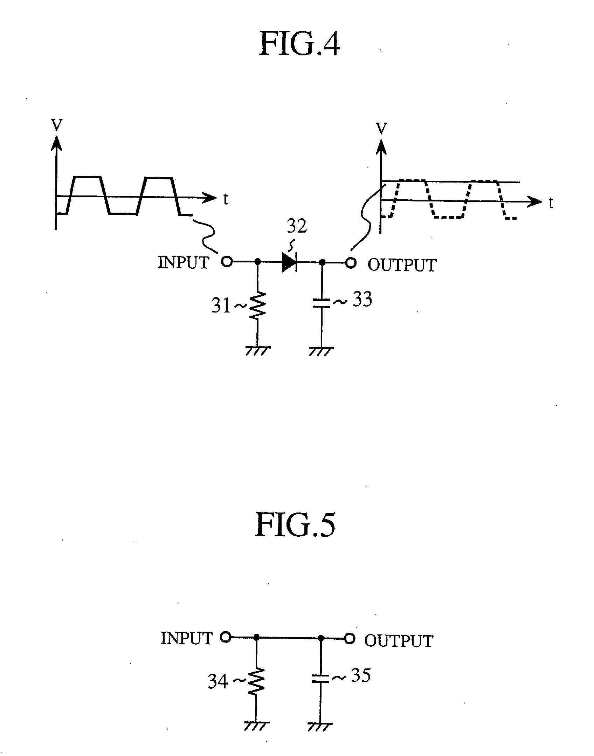

The peak detecting circuit 3 detects a peak of the amplitude of the output of the preamplifier 2 and then outputs the value of the detected peak to the comparing circuit 13. Fig. 4 is a diagram for explaining the structure and operation of the peak detecting circuit. The peak detecting circuit 3 is provided with, for example, a resistor 31, a diode 32, and a capacitor 33, as shown in Fig. 4, and detects a peak of the amplitude of an input and outputs the value of the peak. The data and clock recovery circuit 14 identifies data carried by the voltage signal from the preamplifier 2 so as to regenerate the data and recovers a clock from the voltage signal.

The current detecting circuit 4 converts an average level of the current signal obtained by the light receiving element 1 into a voltage and outputs the voltage to the voltage transformation circuit 5. The voltage transformation circuit 5 converts the output voltage of the current detecting circuit 4 during receiving the optical signal into a voltage lower than the output voltage of the peak detecting circuit 3 during receiving the optical signal.

The voltage holding circuit 6 has a time constant which is set so that the optical power monitoring circuit 11 has a time constant larger than that of the threshold setting circuit 12, and holds the output voltage from the voltage transformation circuit 5 during only a time period determined by the time constant thereof after the optical input has been cut off. Because the average level of the current which flows through the light receiving element 1 is proportional to the power of the input optical signal, the output voltage of the voltage holding circuit 6 prior to the cutoff of the optical signal is also proportional to the power of the input optical signal. Fig. 5 is a diagram showing the structure of the voltage holding circuit 6. The voltage holding circuit 6 is provided with a resistor 34 and a capacitor 35, for example, as shown in Fig. 5.

The selecting circuit 7 selects a higher one from the output voltage of the holding circuit 6 and a predetermined minimum reference voltage, and outputs the selected voltage as the threshold voltage Vth. The comparing circuit 13 compares the output voltage of the optical power monitoring circuit 11 with the threshold voltages Vth from the threshold setting circuit 12, and outputs an optical cutoff alarm signal when the output voltage of the optical power monitoring circuit 11 is lower than the threshold voltage Vth. In other words, in the case of Fig. 1, the comparing circuit 13 compares the voltage detected by the peak detecting circuit 3 with the threshold voltage Vth from the selecting circuit 7, and outputs an optical cutoff alarm signal when the voltage detected by the peak detecting circuit 3 is lower than the threshold voltage Vth.

Next, the reason why the selecting circuit 7 is disposed will be explained. Comparing the output voltage of the voltage holding circuit 6 with the output voltage of the peak detecting circuit 3, because the output voltage of the peak detecting circuit 3 is always larger than the output voltage of the voltage holding circuit 6 when the power of the input optical signal decreases slowly due to a secular variation of a light emitting element emitting the optical signal, or the like, no optical cutoff alarm signal is output even if the power of the input optical signal becomes very small.

Then, when the power of the input optical signal decreases slowly due to a secular variation of a light emitting element emitting the optical signal and the output voltage from the holding circuit 6 becomes lower than the predetermined minimum reference voltage, the selecting circuit 7 selects the predetermined minimum reference voltage and outputs it as the threshold voltage Vth. The comparing circuit 13 then compares the output voltage of the peak detecting circuit 3 with the predetermined minimum reference voltage, which is output as the threshold voltage Vth, and outputs an optical cutoff alarm signal when the output voltage of the peak detecting circuit 3 is lower than the predetermined minimum reference voltage.

When no consideration is given to a very-slowly decrease in the power of the input optical signal due to a secular variation of a light emitting element emitting the optical signal or the like, the selecting circuit 7 can be omitted and the output voltage of the voltage holding circuit 6 can be delivered directly to the comparing circuit 13 as the threshold voltage Vth.

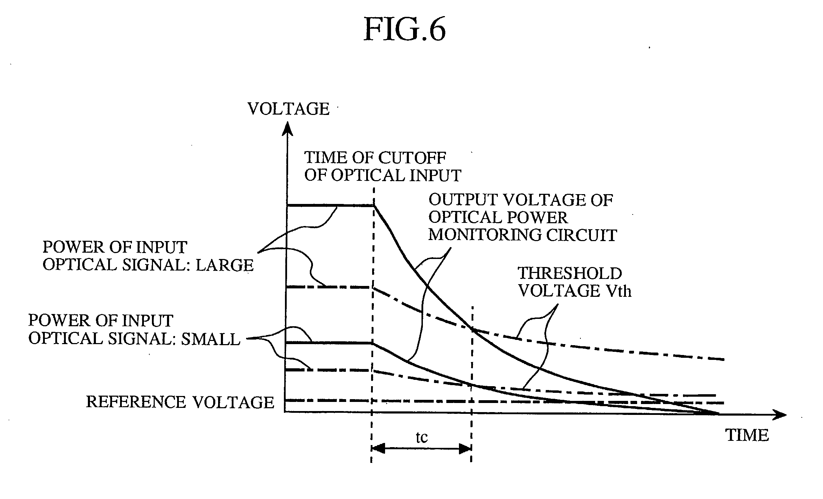

Fig. 6 is a diagram showing the output voltage characteristics and threshold voltage characteristics of the optical power monitoring circuit at the time of a cutoff of the optical input. Before the optical input is cut off, the output voltage of the optical power monitoring circuit 11 increases as the power of the input optical signal increases, and the output voltage of the optical power monitoring circuit 11 decreases as the power of the input optical signal decreases . Furthermore, the threshold voltage Vth, which is the output of the threshold setting circuit 12, is lower than the output voltage of the optical power monitoring circuit 11 before the optical input is cut off, and has a value proportional to the power of the input optical signal and the output voltage of the optical power monitoring circuit 11.

The output voltage of the optical power monitoring circuit 11 decreases with a predetermined time constant after the optical input has been cut off. Although because the time constant of the threshold setting circuit 12 is set to be larger than that of the optical power monitoring circuit 11 by virtue of the voltage holding circuit 6, the threshold voltage Vth, which is the output of threshold setting circuit 12, also decreases simultaneously with a predetermined time constant, the rate of decrease in the threshold voltage Vth is smaller than that in the output voltage of the optical power monitoring circuit 11 and therefore the output voltage of the optical power monitoring circuit 11 becomes lower than the threshold voltage Vth after the expiration of a predetermined time interval.

Because the predetermined time interval, i.e., the time that elapses until an optical cutoff alarm is output after the cutoff of the optical input is determined by the ratio of the output voltage of the optical power monitoring circuit 11 and the output voltage of the threshold setting circuit 12 prior to the optical cutoff and their respective time constants, the predetermined time interval has a constant value tc regardless of the power of the input optical signal and can be shorter than t2, as shown in Fig. 21, which is the time required for the output voltage of the peak detection unit 105 to decrease to the threshold voltage Vth when the input optical signal has a large amount of power, in the prior art optical receiver.

Next, a description will be made as to the reason why the time that elapses between the cutoff of the optical input and the outputting of an optical cutoff alarm does not vary and becomes constant.

Assuming that the output voltage of the optical power monitoring circuit 11 is V0 before the optical input is cut off, the threshold voltage is Vth0 before the optical input is cut off, the ratio of Vth0 to V0 is a (a<1) which is determined by the voltage transformation circuit 5, the time constant of the optical power monitoring circuit 11 is τ, the time constant of the threshold setting circuit 12 is τa (τ<τa), which is set by the voltage holding circuit 6, and the time that elapses after the cutoff of the optical input is t, the output voltage V of the optical power monitoring circuit 11 and the threshold voltage Vth after the optical input has been cut off are given by the following equations (1) and (2):

$$V = V0 \cdot \exp(-t/\tau) \qquad (1)$$

$$Vth = a \cdot V0 \cdot \exp(-t/\tau a) \qquad (2)$$

Assuming that the time that elapses after the optical input has been cut off until the output voltage V of the optical power monitoring circuit 11 reaches the threshold voltage Vth is tc, the following equation (3) is acquired from the equations (1) and (2):

$$V0 \cdot \exp(-tc/\tau) = a \cdot V0 \cdot \exp(-tc/\tau a) \qquad (3)$$

Then the following equation (4) is acquired from the equation (3):

$$tc = (\tau \cdot \tau a/(\tau - \tau a)) \cdot \ln(a) \qquad (4)$$

As shown in the equation (4), the time tc that elapses until the output voltage V of the optical power monitoring circuit 11 reaches the threshold voltage Vth after the optical input has been cut off does not depend on the output voltage V0 of the optical power monitoring circuit 11 prior to the cutoff of the optical input and the threshold voltage Vth0 prior to the cutoff of the optical input. In other words, tc does not depend on the power of the input optical signal, and has a constant value determined by the ratio a of Vth0 to V0, the time constant $\tau$ of the optical power monitoring circuit 11, and the time constant $\tau$a of the threshold setting circuit 12.

Because the output voltages from the peak detecting circuit 3 and the current detecting circuit 4a decrease somewhat when the optical signal input to the light receiving element 1 carries data having a series of 0s, both the ratio a of Vth0 to V0 and the time constant $\tau$a of the threshold setting circuit 12 need to be set in consideration of the decreases in the output voltages from the peak detecting circuit 3 and the current detecting circuit 4a.

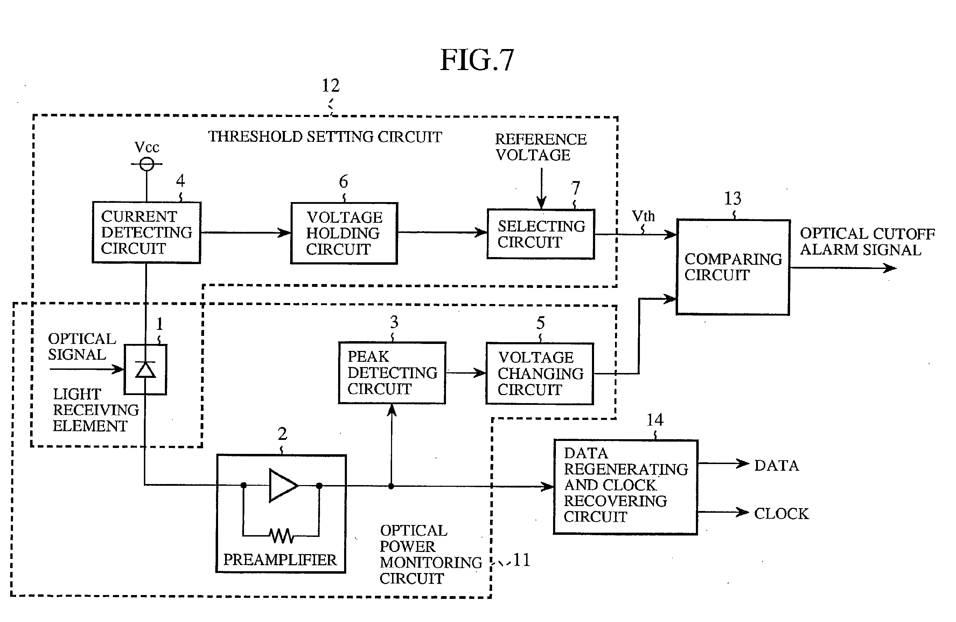

Figs . 7 to 14 are block diagrams each showing the structure of an optical receiver including an apparatus for detecting cutoff of an optical signal according to a variant of embodiment 1 of the present invention. In the optical receiver of Fig. 1, the threshold setting circuit 12 is provided with the voltage transformation circuit 5 and the voltage holding circuit 6. As an alternative, the voltage transformation circuit 5 and/or the voltage holding circuit 6 can be disposed in the optical power monitoring circuit 11, as shown in Figs. 7 to 14.

Fig. 7 shows a variant of embodiment 1 in which the voltage transformation circuit 5 of Fig. 1 is moved into the optical power monitoring circuit 11, and, in this variant, the voltage transformation circuit 5 converts the output voltage of the peak detecting circuit 3 during receiving the optical signal into a voltage higher than the output voltage of the voltage holding circuit 6 during receiving the optical signal.

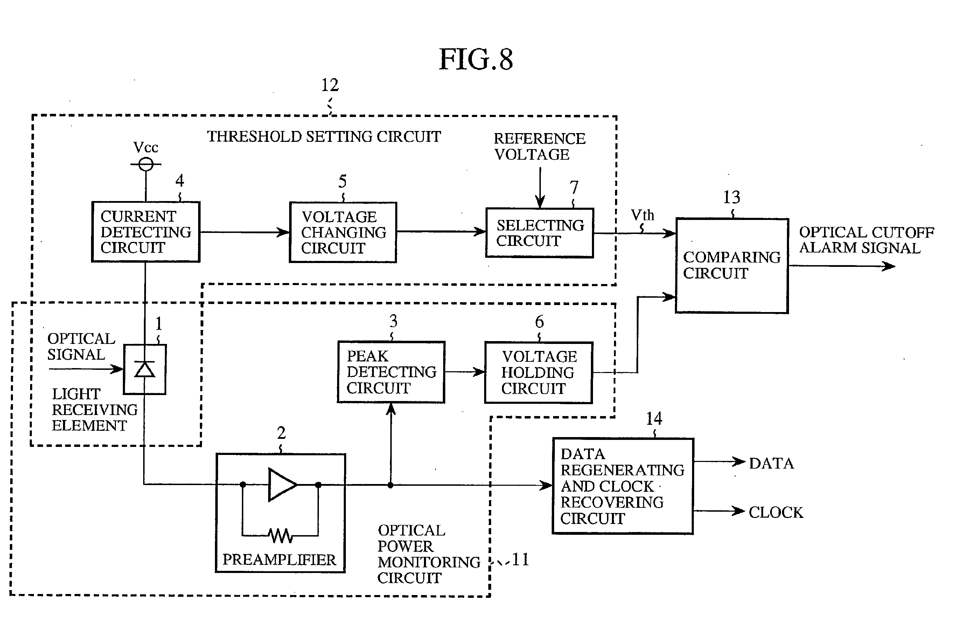

Fig. 8 shows a variant of embodiment 1 in which the voltage holding circuit 6 of Fig. 1 is moved into the optical power monitoring circuit 11, and, in this variant, the voltage transformation circuit 5 converts the output voltage of the current detecting circuit 4 during receiving the optical signal into a voltage lower than the output voltage of the voltage holding circuit 6 during receiving the optical signal. The variant having this structure can be applied to a case where the threshold setting circuit 12 has a very large time constant, because the voltage holding circuit 6 is disposed in the optical power monitoring circuit 11.

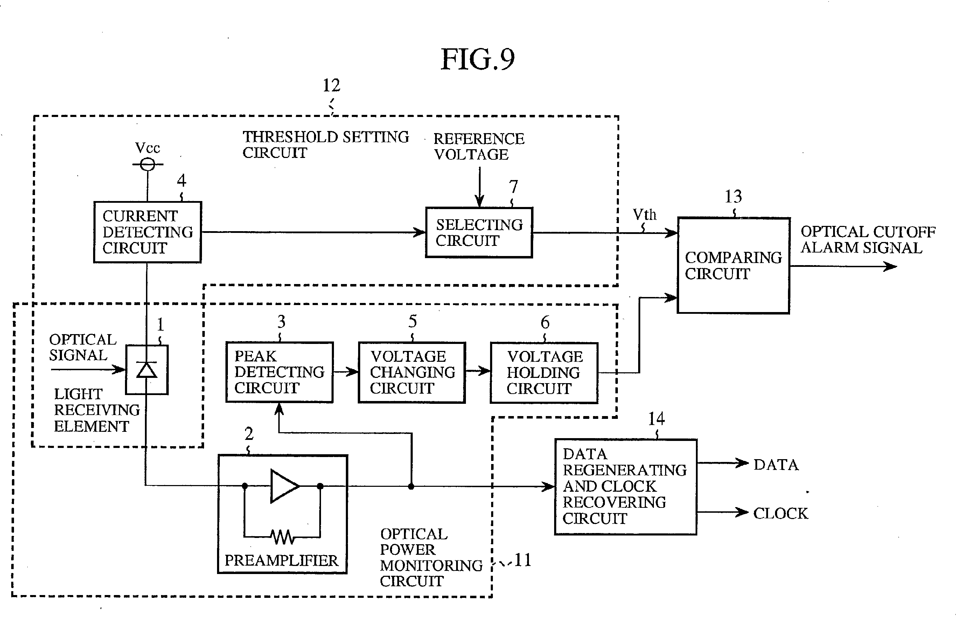

Fig. 9 shows a variant of embodiment 1 in which the voltage transformation circuit 5 and the voltage holding circuit 6 of Fig. 1 are moved into the optical power monitoring circuit 11, and, in this variant, the voltage transformation circuit 5 converts the output voltage of the peak detecting circuit 3 during receiving the optical signal into a voltage higher than the output voltage of the current detecting circuit 4 during receiving the optical signal. The variant having this structure can be applied to a case where the threshold setting circuit 12 has a very large time constant, too, because the voltage holding circuit 6 is disposed in the optical power monitoring circuit 11.

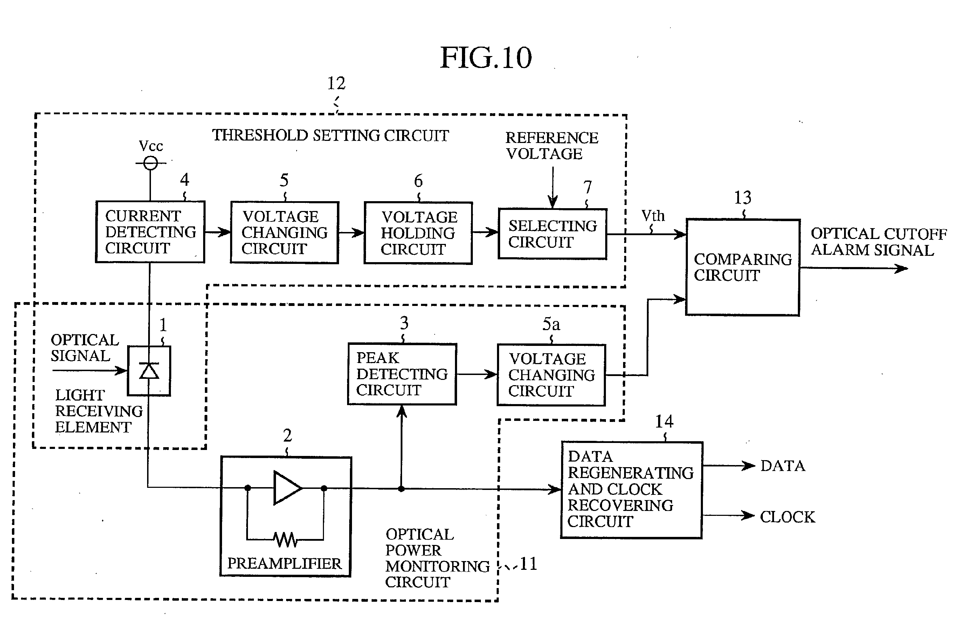

Fig. 10 shows a variant of embodiment 1 in which a voltage transformation circuit 5a is added to the optical power monitoring circuit 11 of Fig. 1, and, in this variant, the voltage transformation circuit 5a and the voltage transformation circuit 5 set the output voltage of the voltage transformation circuit 5a during receiving the optical signal so that it becomes higher than the output voltage of the voltage holding circuit 6 during receiving the optical signal.

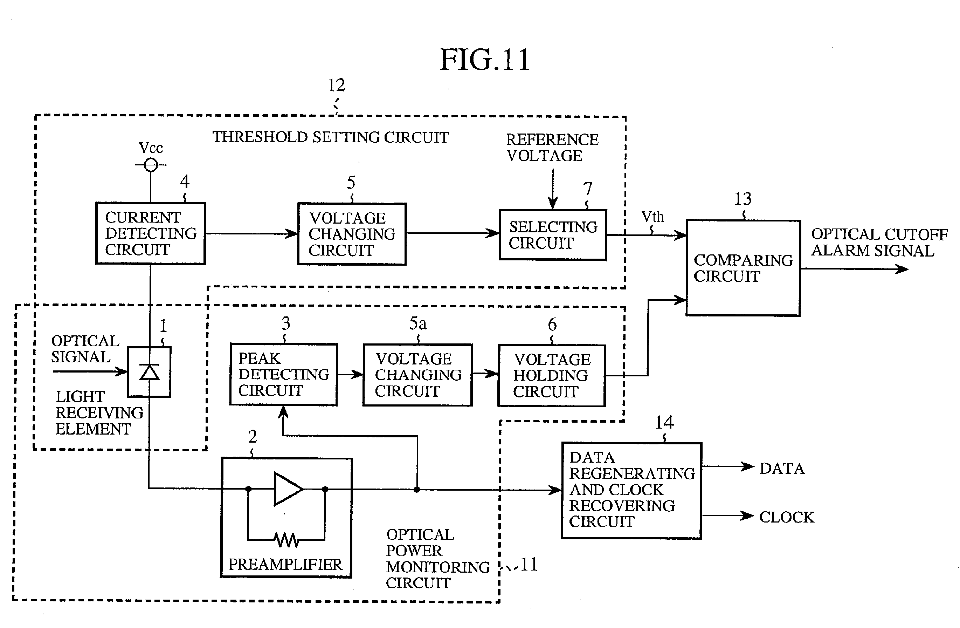

Fig. 11 shows a variant of embodiment 1 in which, in the case of Fig. 10, the voltage holding circuit 6 of Fig. 10 is moved into the optical power monitoring circuit 11, and, in this variant, the voltage transformation circuit 5 and the voltage transformation circuit 5a set the output voltage of the voltage transformation circuit 5 during receiving the optical signal so that it becomes higher than the output voltage of the voltage holding circuit 6 during receiving the optical signal. The variant having this structure can be applied to a case where the threshold setting circuit 12 has a very large time constant, too, because the voltage holding circuit 6 is disposed in the optical power monitoring circuit 11.

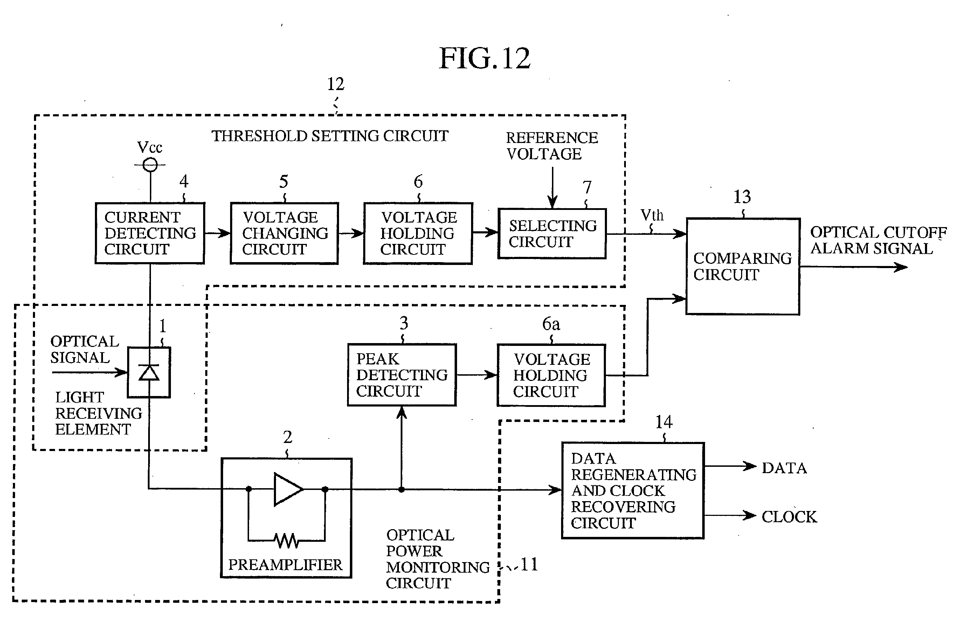

Fig. 12 is a variant of embodiment 1 in which a voltage holding circuit 6a is added to the optical power monitoring circuit 11 of Fig. 1, and, in this variant, the voltage transformation circuit 5 converts the output voltage of the current detecting circuit 4 during receiving the optical signal into a voltage lower than the output voltage of the voltage holding circuit 6a during receiving the optical signal. Furthermore, the time constants of the voltage holding circuit 6 and the voltage holding circuit 6a are set so that the threshold setting circuit 12 has a time constant larger than that of the optical power monitoring circuit 11.

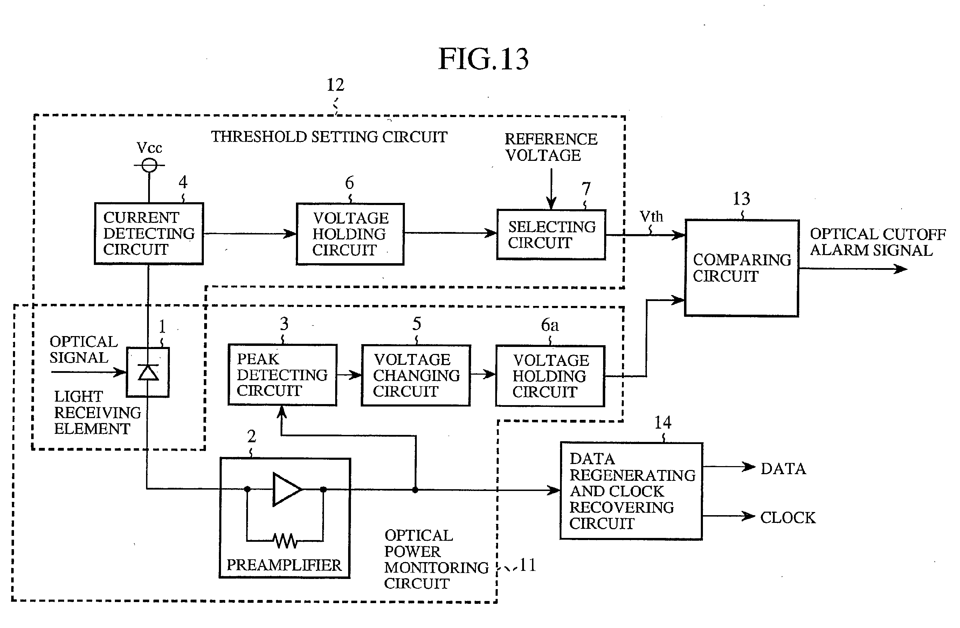

Fig. 13 shows a variant of embodiment 1 in which, in the case of Fig. 12, the voltage transformation circuit 5 is moved into the optical power monitoring circuit 11, and, in this variant, the voltage transformation circuit 5 converts the output voltage of the peak detecting circuit 3 during receiving the optical signal into a voltage higher than the output voltage of the voltage holding circuit 6 during receiving the optical signal. Furthermore, the time constants of the voltage holding circuit 6 and the voltage holding circuit 6a are set so that the threshold setting circuit 12 has a time constant larger than that of the optical power monitoring circuit 11.

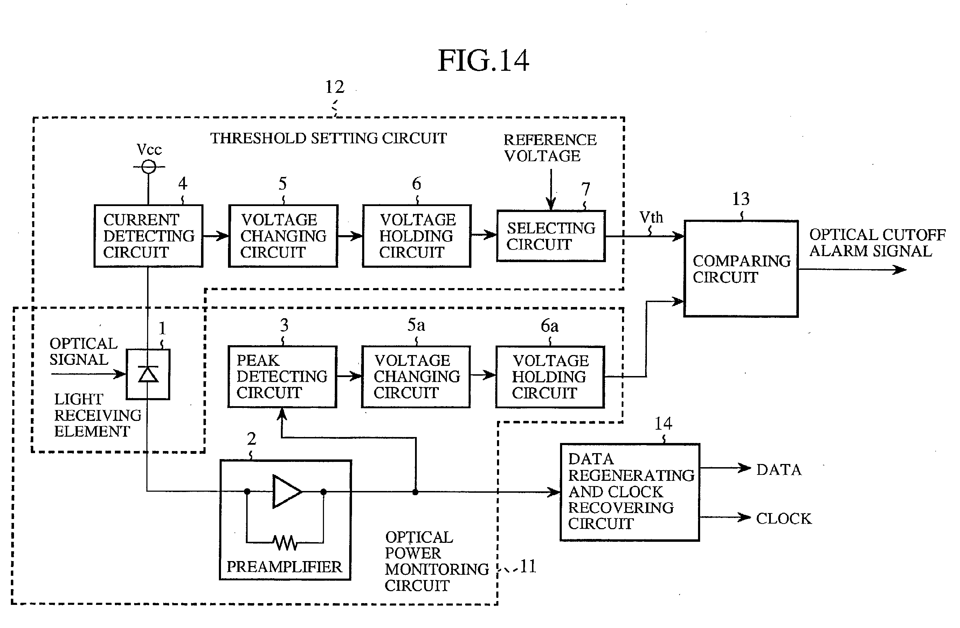

Fig. 14 shows a variant of embodiment 1 in which a voltage transformation circuit 5a and a voltage holding circuit 6a are added to the optical power monitoring circuit 11 in Fig. 1, and, in this variant, the voltage transformation circuit 5a and the voltage transformation circuit 5 set the output voltage of the voltage holding circuit 6a during receiving the optical signal so that it becomes higher than the output voltage of the voltage holding circuit 6 during receiving the optical signal. Furthermore, the time constants of the voltage holding circuit 6 and the voltage holding circuit 6a are set so that the threshold setting circuit 12 has a time constant larger than that of the optical power monitoring circuit 11.

As mentioned above, in accordance with this embodiment 1, the time that elapses until an optical cutoff alarm signal is output does not vary according to the power of the input optical signal and is maintained constant. Furthermore, the time that elapses until an optical cutoff alarm signal is output is short even when the power of the input optical signal is large. Thus the optical receiver of this embodiment is applicable to a communication system in which limitations are imposed on variations in the time that elapses until an optical cutoff alarm signal is output after the input optical signal has been cut off, and a communication system in which quick responsivity is needed when outputting an optical cutoff alarm signal.

Embodiment 2.

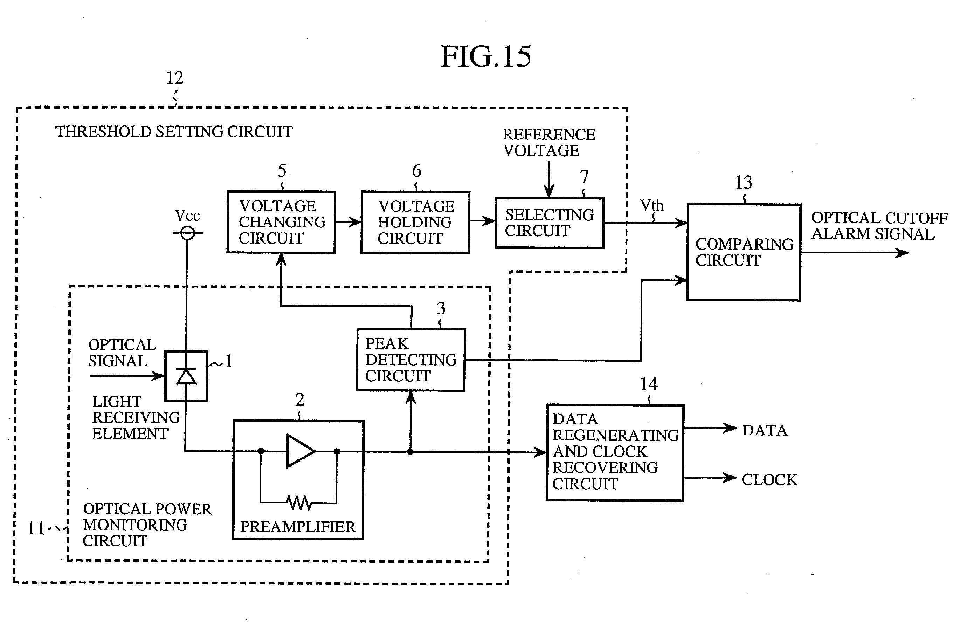

Fig. 15 is a block diagram showing the structure of an optical receiver including an apparatus for detecting cutoff of an optical signal according to embodiment 2 of the present invention. In the figure, reference numeral 5 denotes a voltage transformation circuit for converting an output voltage from a peak detecting circuit 3 during receiving an optical signal into a lower voltage lower. A light receiving element 1, a preamplifier 2, the peak detecting circuit 3, a voltage holding circuit 6, a selecting circuit 7, a comparing circuit 13, and a data and clock recovery circuit 14 included in the optical receiver are the same as those of embodiment 1 as shown in the Fig. 1, respectively. A current detecting circuit 4 as shown in Fig. 1 is omitted in Fig. 15.

Furthermore, in Fig. 15, reference numeral 11 denotes an optical power monitoring circuit provided with the light receiving element 1, the preamplifier 2, and the peak detecting circuit 3, and reference numeral 12 denotes a threshold setting circuit provided with the light receiving element 1, the preamplifier 2, the peak detecting circuit 3, the voltage transformation circuit 5, the voltage holding circuit 6, and the selecting circuit 7. The apparatus for detecting cutoff of an optical signal is comprised of the optical power monitoring circuit 11, the threshold setting circuit 12, and the comparing circuit 13.

Next, a description will be made as to the operation of the optical receiver according to embodiment 2 of the present invention. In Fig. 15, as compared with the optical receiver of embodiment 1 shown in Fig. 1, the optical receiver of embodiment 2 differs from that of embodiment 1 in that a voltage input to the voltage transformation circuit 5 of the threshold setting circuit 12 is output from the peak detecting circuit 3 rather than the current detecting circuit 4. The other structure and operation of the optical receiver according to embodiment 2 of the present invention are almost similar to those of the optical receiver of embodiment 1 as shown in Fig. 1. Furthermore, the optical power monitoring circuit has the same output voltage characteristics and the same threshold voltage characteristics as those of the optical power monitoring circuit of embodiment 1 as shown in the Fig. 6 at the time of a cutoff of the optical input.

While in accordance with embodiment 1 of Fig. 1, the threshold setting circuit 12 determines the threshold voltage Vth based on the output of the current detecting circuit 4, in accordance with this embodiment 2, the threshold setting circuit 12 determines the threshold voltage Vth based on the output of the peak detecting circuit 3 of the optical power monitoring circuit 11. Thus, even when the power of the input optical signal is very large, the optical receiver makes it possible to maintain the time that elapses until an optical cutoff alarm is output after the cutoff of the optical input constant.

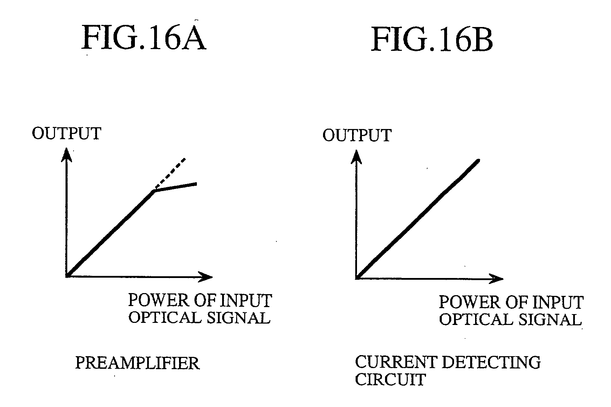

Figs . 16A and 16B are diagrams showing the input and output characteristics of the preamplifier and the current detecting circuit, respectively. As shown in Figs. 16A and 16B, while the preamplifier 2 cannot keep its linearity because it saturates or keeps its output constant intentionally when the input optical signal has very large power, the current detecting circuit 4 can keep its linearity even when the input optical signal has very large power.

Therefore, in accordance with embodiment 1, when the input optical signal has very large power, the ratio of the output voltage of the threshold setting circuit 12 to the output voltage of the optical power monitoring circuit 11 increases as compared with a case where the input optical signal has ordinary power. As a result, the time that elapses until an optical cutoff alarm is output after the cutoff of the optical input is shortened to some extent. In contrast, in accordance with embodiment 2, even when the input optical signal has very large power, the ratio of the output voltage of the threshold setting circuit 12 to the output voltage of the optical power monitoring circuit 11 is kept constant as compared with a case where the input optical signal has ordinary power and therefore the time that elapses until an optical cutoff alarm is output after the cutoff of the optical input is kept constant.

As shown in Fig. 15, the voltage transformation circuit 5 and the voltage holding circuit 6 are disposed in the threshold setting circuit 12. As an alternative, the voltage transformation circuit and/or the voltage holding circuit can be moved into the optical power monitoring circuit 11, or another voltage transformation circuit and/or another voltage holding circuit can be added to the optical power monitoring circuit 11, as shown in Figs. 7 to 14.

As mentioned above, in accordance with this embodiment 2, the time that elapses until an optical cutoff alarm signal is output after the cutoff of the optical input does not vary according to the power of the input optical signal and is maintained constant. Furthermore, the time that elapses until an optical cutoff alarm is output after the cutoff of the optical input is short even when the power of the input optical signal is large. Thus the optical receiver of this embodiment is applicable to a communication system in which limitations are imposed on variations in the time that elapses until an optical cutoff alarm is output after the cutoff of the optical input, and a communication system in which quick responsivity is required when outputting an optical cutoff alarm signal.

Embodiment 3.

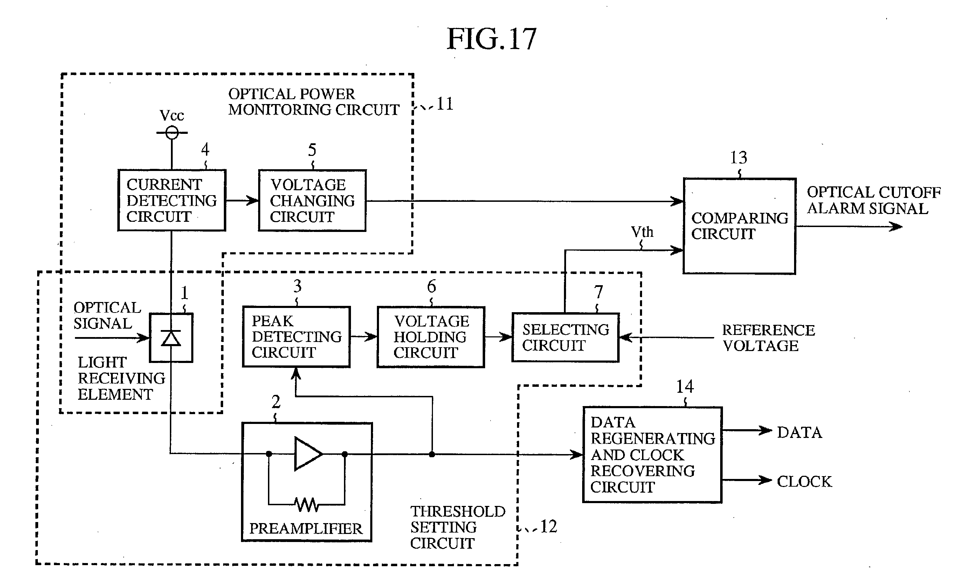

Fig. 17 is a block diagram showing the structure of an optical receiver including an apparatus for detecting cutoff of an optical signal according to embodiment 3 of the present invention. In the figure, reference numeral 5 denotes a voltage transformation circuit for converting a voltage output from a current detecting circuit 4 during receiving an optical signal into a voltage higher than an output voltage of a voltage holding circuit 6 during receiving the optical signal. The voltage holding circuit 6 holds an output voltage from a peak detecting circuit 3 during only a time period determined by a predetermined time constant thereof. Reference numeral 13 denotes a comparing circuit for comparing an output voltage of an optical power monitoring circuit 11 with a threshold voltages Vth from a threshold setting circuit 12, and for outputting an optical cutoff alarm signal when the output voltage of the optical power monitoring circuit 11 is lower than the threshold voltage Vth. In this case, the comparing circuit compares the output voltage of the voltage transformation circuit 5 with the threshold voltages Vth from a selecting circuit 7, and outputs an optical cutoff alarm signal when the output voltage of the voltage transformation circuit 5 is lower than the threshold voltage Vth.

A light receiving element 1, the preamplifier 2, the peak detecting circuit 3, the current detecting circuit 4, a selecting circuit 7, and a data and clock recovery circuit 14 included in the optical receiver are the same as those of embodiment 1 as shown in the Fig. 1, respectively.

Furthermore, in Fig. 17, reference numeral 11 denotes an optical power monitoring circuit provided with the light receiving element 1, the current detecting circuit 4, and the voltage transformation circuit 5, and reference numeral 12 denotes a threshold setting circuit provided with the light receiving element 1, the preamplifier 2, the peak detecting circuit 3, the voltage holding circuit 6, and the selecting circuit 7. The apparatus for detecting cutoff of an optical signal is comprised of the optical power monitoring circuit 11, the threshold setting circuit 12, and the comparing circuit 13.

Next, a description will be made as to the operation of the optical receiver according to embodiment 3 of the present invention. In the threshold setting circuit 12, the light receiving element 1 converts an input optical signal into a current signal, and the preamplifier 2 then converts the current signal from the light receiving element 1 into a voltage signal. The peak detecting circuit 3 detects a peak of the amplitude of the output of the preamplifier 2, and outputs it to the voltage holding circuit 6.

The voltage holding circuit 6 has a time constant which is set so that the threshold setting circuit 12 has a time constant larger than that of the optical power monitoring circuit 11, and holds the output voltage from the peak detecting circuit 3 only during a time period determined by the time constant thereof after the optical input has been cut off. Because the amplitude of the current signal which flows through the light receiving element 1 is proportional to the power of the input optical signal, the output voltage of the voltage holding circuit 6 prior to the optical cutoff is also proportional to the power of the input optical signal.

The selecting circuit 7 compares the output voltage from the holding circuit 6 with a minimum reference voltage, and outputs a higher one of them as the threshold voltage Vth.

In the optical power monitoring circuit 11, the light receiving element 1 converts the input optical signal into a current signal, and the current detecting circuit 4 then converts an average level of the current signal obtained by the light receiving element 1 into a voltage and then outputs this voltage. The voltage transformation circuit 5 converts the output voltage from the current detecting circuit 4 during receiving the optical signal into a voltage higher than the output voltage of the voltage holding circuit 6 during receiving the optical signal.

The comparing circuit 13 compares the output voltage of the optical power monitoring circuit 11 with the threshold voltage Vth from the threshold setting circuit 12, and outputs an optical cutoff alarm signal when the output voltage from the optical power monitoring circuit 11 is lower than the threshold voltage Vth. In other words, the comparing circuit 13 compares the output voltage of the voltage transformation circuit 5 with the threshold voltages Vth from the selecting circuit 7, and outputs an optical cutoff alarm signal when the output voltage of the voltage transformation circuit 5 is lower than the threshold voltage Vth. The optical power monitoring circuit has the same output voltage characteristics and the same threshold voltage characteristics as those of the optical power monitoring circuit of embodiment 1 as shown in Fig. 6 at the time of a cutoff of the input optical signal.

As shown in Fig. 17, the voltage transformation circuit 5 is disposed in the optical power monitoring circuit 11 and the voltage holding circuit 6 is disposed in the threshold setting circuit 12. As an alternative, the voltage transformation circuit and/or the voltage holding circuit can be moved into the optical power monitoring circuit 11, or another voltage transformation circuit and/or another voltage holding circuit can be added to the optical power monitoring circuit 11, as shown in Figs. 7 to 14.

As mentioned above, in accordance with this embodiment 3, the time that elapses until an optical cutoff alarm is output after the cutoff of the optical input does not vary according to the power of the input optical signal and is maintained constant. Furthermore, the time that elapses until an optical cutoff alarm is output after the cutoff of the optical input is short even when the power of the input optical signal is large. Thus the optical receiver of this embodiment is applicable to a communication system in which limitations are imposed on variations in the time that elapses until an optical cutoff alarm is output after the cutoff of the optical input, and a communication system in which quick responsivity is required when outputting an optical cutoff alarm signal.

Embodiment 4.

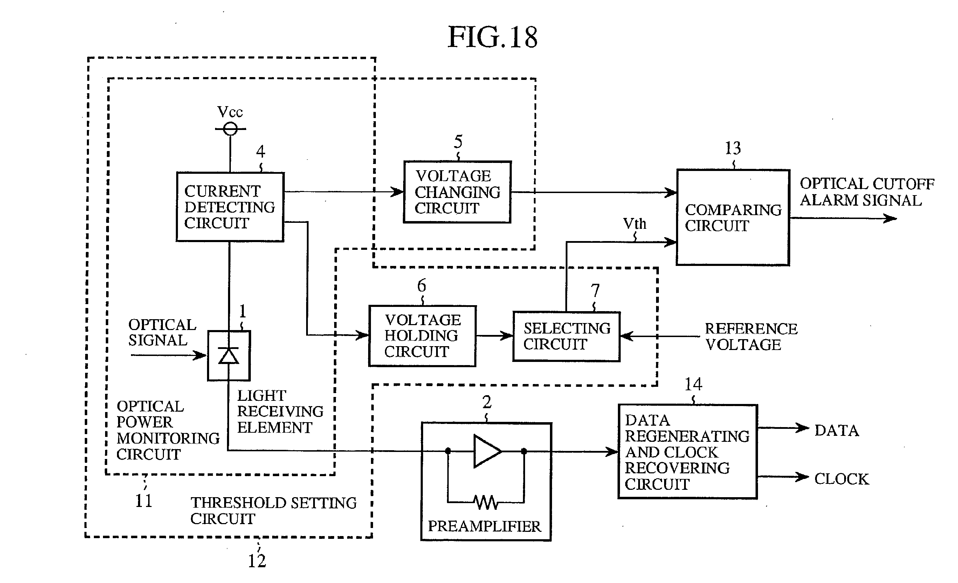

Fig. 18 is a block diagram showing the structure of an optical receiver including an apparatus for detecting cutoff of an optical signal according to embodiment 4 of the present invention. In the figure, reference numeral 6 denotes a voltage holding circuit for holding an output voltage from a current detecting circuit 4 during only a time period determined by a predetermined time constant thereof. A light receiving element 1, a preamplifier 2, the current detecting circuit 4, a voltage transformation circuit 5, a selecting circuit 7, a comparing circuit 13, and a data and clock recovery circuit 14 included in the optical receiver are the same as those of embodiment 3 as shown in the Fig. 17, respectively. A peak detecting circuit 3 as shown in Fig. 17 is omitted in Fig. 18.

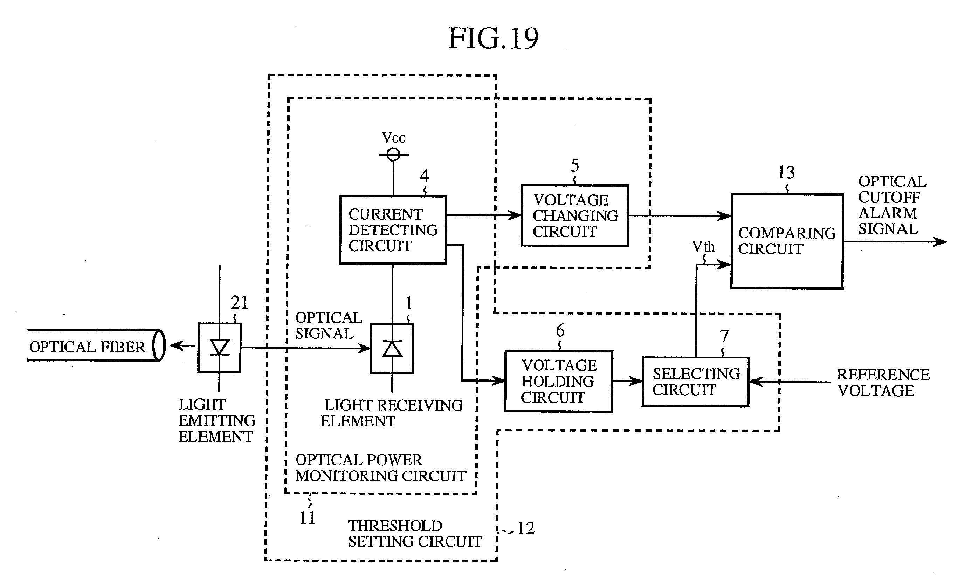

Furthermore, in Fig. 19, reference numeral 11 denotes an optical power monitoring circuit provided with the light receiving element 1, the current detecting circuit 4, and the voltage transformation circuit 5, and reference numeral 12 denotes a threshold setting circuit provided with the light receiving element 1, the current detecting circuit 4, the voltage holding circuit 6, and the selecting circuit 7. The apparatus for detecting cutoff of an optical signal is comprised of the optical power monitoring circuit 11, the threshold setting circuit 12, and the comparing circuit 13.

Next, a description will be made as to the operation of the optical receiver according to embodiment 4 of the present invention. In Fig. 18, as compared with the optical receiver of embodiment 3 shown in Fig. 17, the optical receiver of embodiment 4 differs from that of embodiment 3 in that a voltage input to the voltage holding circuit 6 of the threshold setting circuit 12 is output from the current detecting circuit 4 rather than the peak detecting circuit 3. The other operation of the optical receiver according to embodiment 4 of the present invention is the same as that of the optical receiver of embodiment 3 as shown in Fig. 17. Furthermore, the optical power monitoring circuit has the same output voltage characteristics and the same threshold voltage characteristics as those of the optical power monitoring circuit of embodiment 1 as shown in the Fig. 6 at the time of a cutoff of an optical signal.

While in accordance with embodiment 3 the threshold setting circuit 12 determines the threshold voltage Vth based on the output of the current detecting circuit 3, in accordance with this embodiment 4, the threshold setting circuit 12 determines the threshold voltage Vth based on the output of the current detecting circuit 4 of the optical power monitoring circuit 11. Thus, even when the power of the input optical signal is very large, the optical receiver makes it possible to maintain the time that elapses until an optical cutoff alarm is output after the cutoff of the optical input.

Because the preamplifier 2 and the current detecting circuit 4 have the input and output characteristics as shown in Figs. 16A and 16B, in accordance with embodiment 3, when the input optical signal has very large power, the ratio of the output voltage of the threshold setting circuit 12 to the output voltage of the optical power monitoring circuit 11 decreases as compared with a case where the input optical signal has ordinary power. As a result, the time that elapses until an optical cutoff alarm is output after the cutoff of the optical input is lengthened to some extent. In contrast, in accordance with embodiment 4, even when the input optical signal has very large power, the ratio of the output voltage of the threshold setting circuit 12 to the output voltage of the optical power monitoring circuit 11 is kept constant as compared with a case where the input optical signal has ordinary power and therefore the time that elapses until an optical cutoff alarm is output after the cutoff of the optical input is kept constant.

As shown in Fig. 18, the voltage transformation circuit 5 is disposed in the optical power monitoring circuit 11 and the voltage holding circuit 6 is disposed in the threshold setting circuit 12. As an alternative, the voltage transformation circuit and/or the voltage holding circuit can be moved into the optical power monitoring circuit 11, or another voltage transformation circuit and/or another voltage holding circuit can be added to the optical power monitoring circuit 11, as shown in Figs. 7 to 14.

As mentioned above, in accordance with this embodiment 4, the time that elapses until an optical cutoff alarm is output after the cutoff of the optical input does not vary according to the power of the input optical signal and is maintained constant. Furthermore, the time that elapses until an optical cutoff alarm is output after the cutoff of the optical input is short even when the power of the input optical signal is large. Thus the optical receiver of this embodiment is applicable to a communication system in which limitations are imposed on variations in the time that elapses until an optical cutoff alarm is output after the cutoff of the optical input, and a communication system in which quick responsivity is required when outputting an optical cutoff alarm signal.

Embodiment 5.

Fig. 19 is a block diagram showing the structure of an optical transmitter including an apparatus for detecting cutoff of an optical signal according to embodiment 5 of the present invention. In the figure, reference numeral 21 denotes a light emitting element, such as a laser diode, for sending an optical signal to be transmitted to an optical fiber and for sending an optical signal used for optical power monitoring to a light receiving element 1. The light receiving element 1, a current detecting circuit 4, a voltage transformation circuit 5, a voltage holding circuit 6, a selecting circuit 7, an optical power monitoring circuit 11, a threshold setting circuit 12, and a comparing circuit 13 included in the apparatus for detecting cutoff of an optical signal of embodiment 5 are the same as those of the apparatus for detecting cutoff of an optical signal of embodiment 4, respectively.

Next, a description will be made as to the operation of the apparatus for detecting cutoff of an optical signal of the optical transmitter according to embodiment 5 of the present invention. The apparatus for detecting cutoff of an optical signal of the optical transmitter operates in the same way that the apparatus for detecting cutoff of an optical signal of the optical receiver according to embodiment 4 does, with the exception that the light emitting element 21 sends an optical signal to be transmitted to an optical fiber and also sends another optical signal used for optical power monitoring to the light receiving element 1. In this embodiment, the light emitting element 21 can output an optical cutoff alarm signal indicating a cutoff of the optical signal to be transmitted.

As shown in Fig. 19, the voltage transformation circuit 5 is disposed in the optical power monitoring circuit 11 and the voltage holding circuit 6 is disposed in the threshold setting circuit 12. As an alternative, the voltage transformation circuit and/or the voltage holding circuit can be moved into the optical power monitoring circuit 11, or another voltage transformation circuit and/ or another voltage holding circuit can be added to the optical power monitoring circuit 11, as shown in Figs. 7 to 14.

As mentioned above, in accordance with this embodiment 5, the time that elapses until an optical cutoff alarm is output after the cutoff of the optical input does not vary according to the power of the input optical signal and is maintained constant. Furthermore, the time that elapses until an optical cutoff alarm is output after the cutoff of the optical input is short even when the power of the input optical signal is large. Thus the optical transmitter of this embodiment is applicable to a communication system in which limitations are imposed on variations in the time that elapses until an optical cutoff alarm is output after the cutoff of the optical input, and a communication system in which quick responsivity is required when outputting an optical cutoff alarm signal.

Many widely different embodiments of the present invention may be constructed without departing from the spirit and scope of the present invention. It should be understood that the present invention is not limited to the specific embodiments described in the specification, except as defined in the appended claims.

**Claims**

1. An apparatus for detecting cutoff of an optical signal **characterized in that** said apparatus comprises:

   an optical power monitoring circuit (11) for producing an output voltage corresponding to power of an input optical signal;
   a threshold voltage setting circuit (12) for setting a threshold voltage corresponding to the power of the input optical signal so that the threshold voltage during receiving the optical signal is lower than the output voltage produced by said optical power monitoring circuit during receiving the optical signal, said threshold voltage setting circuit having a time constant larger than that of said optical power monitoring circuit; and
   a comparing circuit (13) for comparing the output voltage produced by said optical power monitoring circuit with the threshold voltage set by said threshold voltage setting circuit and for outputting an optical cutoff alarm signal indicating a cutoff of the input optical signal according to a comparison result.

2. The apparatus according to Claim 1, **characterized in that** said comparing circuit outputs the optical cutoff alarm signal in a case where the output voltage produced by said optical power monitoring circuit is lower than the threshold voltage set by said threshold voltage setting circuit.

3. The apparatus according to claim 1, **characterized in that** said optical power monitoring circuit includes a light receiving element (1) for converting the input optical signal into a current signal, an amplifying circuit (2) for converting the current signal obtained by said light receiving element into a voltage signal, and a peak detecting circuit (3) for detecting an amplitude of the voltage signal obtained by said amplifying circuit and for outputting the amplitude as the output voltage produced by said optical power monitoring circuit, and said threshold voltage setting circuit includes said light receiving element, a current detecting circuit (4) for detecting an average level of the current signal obtained by said light receiving element and for converting the average level of the current signal into a voltage, a voltage changing circuit (5) for changing the voltage obtained by said current detecting circuit during receiving the optical signal into a voltage lower than the output voltage from said peak detecting circuit during receiving the optical signal, and a voltage holding circuit (6) having a time constant which is set so that said threshold voltage setting circuit has a time constant larger than that of said optical power monitoring circuit, for holding the lower voltage obtained by said voltage changing circuit during only a time period determined by the time constant thereof and for outputting the lower voltage as the threshold voltage.

4. The apparatus according to claim 1, **characterized in that** said optical power monitoring circuit includes a light receiving element (1) for converting the input optical signal into a current signal, an amplifying circuit (2) for converting the current signal obtained by said light receiving element into a voltage signal, and a peak detecting circuit (3) for detecting an amplitude of the voltage signal obtained by said amplifying circuit and for outputting the amplitude as the output voltage produced by said optical power monitoring circuit, and said threshold voltage setting circuit includes said light receiving element, said amplifying circuit, said peak detecting circuit, a voltage changing circuit (5) for changing the output voltage from said peak detecting circuit during receiving the optical signal into a lower voltage, and a voltage holding circuit (6) having a time constant which is set so that said threshold voltage setting circuit has a time constant larger than that of said optical power monitoring circuit, for holding the lower voltage obtained by said voltage changing circuit during only a specific time period determined by the time constant thereof and for outputting the lower voltage as the threshold voltage.

5. The apparatus according to Claim 1, **characterized in that** said threshold voltage setting circuit includes a light receiving element (1) for converting the input optical signal into a current signal, an amplifying circuit (2) for converting the current signal obtained by said light receiving element into a voltage signal, a peak detecting circuit (3) for detecting an amplitude of the voltage signal obtained by said amplifying circuit and for outputting a voltage corresponding to the amplitude, and a voltage holding circuit (6) having a time constant which is set so that said threshold voltage setting circuit has a time constant larger than that of said optical power monitoring circuit, for holding the voltage from said peak detecting circuit during only a time period determined by the time constant thereof and for outputting the voltage as the threshold voltage, and said optical power monitoring circuit includes said light receiving element, a current detecting circuit (4) for detecting an average level of the current signal obtained by said light receiving element and for converting the average level into a voltage, and a voltage changing circuit (5) for changing the voltage obtained by said current detecting circuit during receiving the optical signal into a voltage higher than the threshold voltage from said voltage holding circuit during receiving the optical signal, and for outputting the higher voltage as the output voltage produced by said optical power monitoring circuit.

6. The apparatus according to Claim 1, **characterized in that** said threshold voltage setting circuit includes a light receiving element (1) for converting the input optical signal into a current signal, a current detecting circuit (4) for detecting an average level of the current signal obtained by said light receiving element and for converting the average level into a voltage, and a voltage holding circuit (6) having a time constant which is set so that said threshold voltage setting circuit has a time constant larger than that of said optical power monitoring circuit, for holding the voltage obtained by said current detecting circuit during only a time period determined by the time constant thereof and for outputting the voltage as the threshold voltage, and said optical power monitoring circuit includes said light receiving element, said current detecting circuit, and a voltage changing circuit (5) for changing the voltage obtained by said current detecting circuit during receiving the optical signal into a voltage higher than the threshold voltage from said voltage holding circuit during receiving the optical signal, and for outputting the higher voltage as the output voltage produced by said optical power monitoring circuit.

7. The apparatus according to any one of Claims 3 to 6, **characterized in that** said apparatus further comprises a selecting circuit (7) for comparing the threshold voltage from said voltage holding circuit with a predetermined reference voltage, and for selecting a higher one fromthe threshold voltage and the predetermined reference voltage so as to output the higher voltage as the threshold voltage.

8. An optical receiver **characterized in that** said receiver comprises:

> an optical power monitoring circuit (11) for producing an output voltage corresponding to power of an input optical signal;
> a threshold voltage setting circuit (12) for setting a threshold voltage corresponding to the power of the input optical signal so that the threshold voltage during receiving the optical signal is lower than the output voltage produced by said optical power monitoring circuit during receiving the optical signal, said threshold voltage setting circuit having a time constant larger than that of said optical power monitoring circuit;

a comparing circuit (13) for comparing the output voltage produced by said optical power monitoring circuit with the threshold voltage set by said threshold voltage setting circuit and for outputting an optical cutoff alarm signal indicating a cutoff of the input optical signal; and

a data and clock recovery circuit (14) for identifying data carried by the optical signal so as to regenerate the data and for recovering a clock from the optical signal.

9. The optical receiver according to claim 8, **characterized in that** said comparing circuit outputs the optical cutoff alarm signal in a case where the output voltage produced by said optical power monitoring circuit is lower than the threshold voltage set by said threshold voltage setting circuit.

10. An optical transmitter **characterized in that** said transmitter comprises:

a light emitting element (21) for outputting an optical signal;

an optical power monitoring circuit (11) for accepting the optical signal from said light emitting element and for producing an output voltage corresponding to power of the optical signal;

a threshold voltage setting circuit (12) for accepting the optical signal from said light emitting element and for producing a threshold voltage corresponding to the power of the optical signal and being lower than the output voltage produced by said optical power monitoring circuit during receiving the optical signal, said threshold voltage setting circuit having a time constant larger than that of said optical power monitoring circuit; and

a comparing circuit (13) for comparing the output voltage produced by said optical power monitoring circuit with the threshold voltage set by said threshold voltage setting circuit and for outputting an optical cutoff alarm signal indicating a cutoff of the optical signal according to a comparison result.

11. The optical transmitter according to claim 10, **characterized in that** said comparing circuit outputs the optical cutoff alarm signal in a case where the output voltage produced by said optical power monitoring circuit is lower than the threshold voltage set by said threshold voltage setting circuit.

12. A method of detecting cutoff of an optical signal **characterized in that** said method comprises the steps of:

providing a threshold voltage setting circuit (12) having a time constant larger than that of an optical power monitoring circuit (11);

by using said optical power monitoring circuit, producing an output voltage corresponding to power of an input optical signal;

by using said threshold voltage setting circuit, setting a threshold voltage corresponding to the power of the input optical signal during receiving the optical signal so that the threshold voltage is lower than the output voltage produced by using said optical power monitoring circuit during receiving the optical signal;

comparing the output voltage produced by using said optical power monitoring circuit with the threshold voltage set by using said threshold voltage setting circuit; and

outputting an optical cutoff alarm signal indicating a cutoff of the optical signal according to a comparison result obtained in said comparing step.

# FIG.1

THRESHOLD SETTING CIRCUIT — 12

Vcc

CURRENT DETECTING CIRCUIT (4)

VOLTAGE CHANGING CIRCUIT (5)

VOLTAGE HOLDING CIRCUIT (6)

REFERENCE VOLTAGE

SELECTING CIRCUIT (7)

Vth

COMPARING CIRCUIT (13)

OPTICAL CUTOFF ALARM SIGNAL

OPTICAL SIGNAL

LIGHT RECEIVING ELEMENT (1)

PEAK DETECTING CIRCUIT (3)

PREAMPLIFIER (2)

OPTICAL POWER MONITORING CIRCUIT — 11

DATA REGENERATING AND CLOCK RECOVERING CIRCUIT (14)

DATA

CLOCK

EP 1 315 317 A2

# FIG.2

ELECTRIC
CURRENT

POWER OF INPUT
OPTICAL SIGNAL

# FIG.3

VOLTAGE

POWER OF INPUT
OPTICAL SIGNAL: LARGE

POWER OF INPUT
OPTICAL SIGNAL: SMALL

TIME

# FIG.4

# FIG.5

# FIG.6

VOLTAGE

TIME OF CUTOFF
OF OPTICAL INPUT

OUTPUT VOLTAGE OF
OPTICAL POWER
MONITORING CIRCUIT

POWER OF INPUT
OPTICAL SIGNAL: LARGE

THRESHOLD
VOLTAGE Vth

POWER OF INPUT
OPTICAL SIGNAL: SMALL

REFERENCE VOLTAGE

tc

TIME

EP 1 315 317 A2

# FIG.7

EP 1 315 317 A2

**12**

THRESHOLD SETTING CIRCUIT

REFERENCE VOLTAGE

Vcc

**4**
CURRENT DETECTING CIRCUIT

**6**
VOLTAGE HOLDING CIRCUIT

**7**
SELECTING CIRCUIT

$V_{th}$

**13**
COMPARING CIRCUIT

OPTICAL CUTOFF ALARM SIGNAL

OPTICAL SIGNAL

**1**
LIGHT RECEIVING ELEMENT

**3**
PEAK DETECTING CIRCUIT

**5**
VOLTAGE CHANGING CIRCUIT

**2**
PREAMPLIFIER

OPTICAL POWER MONITORING CIRCUIT

~11

**14**
DATA REGENERATING AND CLOCK RECOVERING CIRCUIT

DATA

CLOCK

# FIG.8

OPTICAL CUTOFF
ALARM SIGNAL

FIG.9

# FIG.10

FIG.10 — Block diagram. THRESHOLD SETTING CIRCUIT (12) including: CURRENT DETECTING CIRCUIT (4) with Vcc input, VOLTAGE CHANGING CIRCUIT (5), VOLTAGE HOLDING CIRCUIT (6), SELECTING CIRCUIT (7) with REFERENCE VOLTAGE input, providing Vth to COMPARING CIRCUIT (13) which outputs OPTICAL CUTOFF ALARM SIGNAL. OPTICAL POWER MONITORING CIRCUIT (11) including: LIGHT RECEIVING ELEMENT (1) with OPTICAL SIGNAL input, PREAMPLIFIER (2), PEAK DETECTING CIRCUIT (3), VOLTAGE CHANGING CIRCUIT (5a) (14), and DATA REGENERATING AND CLOCK RECOVERING CIRCUIT outputting DATA and CLOCK.

# FIG.11

THRESHOLD SETTING CIRCUIT — 12

Vcc

CURRENT DETECTING CIRCUIT — 4

VOLTAGE CHANGING CIRCUIT — 5

REFERENCE VOLTAGE

SELECTING CIRCUIT — 7

Vth

COMPARING CIRCUIT — 13

OPTICAL CUTOFF ALARM SIGNAL

OPTICAL SIGNAL

LIGHT RECEIVING ELEMENT — 1

PEAK DETECTING CIRCUIT — 3

VOLTAGE CHANGING CIRCUIT — 5a

VOLTAGE HOLDING CIRCUIT — 6

PREAMPLIFIER — 2

OPTICAL POWER MONITORING CIRCUIT — 11

DATA REGENERATING AND CLOCK RECOVERING CIRCUIT — 14

DATA

CLOCK

EP 1 315 317 A2

# FIG.12

THRESHOLD SETTING CIRCUIT — 12

Vcc

CURRENT DETECTING CIRCUIT — 4

VOLTAGE CHANGING CIRCUIT — 5

VOLTAGE HOLDING CIRCUIT — 6

REFERENCE VOLTAGE

SELECTING CIRCUIT — 7

Vth

COMPARING CIRCUIT — 13

OPTICAL CUTOFF ALARM SIGNAL

OPTICAL SIGNAL

LIGHT RECEIVING ELEMENT — 1

PEAK DETECTING CIRCUIT — 3

VOLTAGE HOLDING CIRCUIT — 6a

PREAMPLIFIER — 2

OPTICAL POWER MONITORING CIRCUIT — 11

DATA REGENERATING AND CLOCK RECOVERING CIRCUIT — 14

DATA

CLOCK

EP 1 315 317 A2

# FIG.13

OPTICAL CUTOFF
ALARM SIGNAL

DATA

CLOCK

EP 1 315 317 A2

# FIG.14

OPTICAL CUTOFF ALARM SIGNAL

EP 1 315 317 A2

# FIG.15

# FIG.16A

OUTPUT

POWER OF INPUT
OPTICAL SIGNAL

PREAMPLIFIER

# FIG.16B

OUTPUT

POWER OF INPUT
OPTICAL SIGNAL

CURRENT DETECTING
CIRCUIT

# FIG.17

OPTICAL POWER MONITORING CIRCUIT ~11

Vcc

CURRENT DETECTING CIRCUIT — 4

VOLTAGE CHANGING CIRCUIT — 5

COMPARING CIRCUIT — 13 → OPTICAL CUTOFF ALARM SIGNAL

Vth

OPTICAL SIGNAL

LIGHT RECEIVING ELEMENT — 1

PEAK DETECTING CIRCUIT — 3

VOLTAGE HOLDING CIRCUIT — 6

SELECTING CIRCUIT — 7

REFERENCE VOLTAGE

PREAMPLIFIER — 2

THRESHOLD SETTING CIRCUIT ~12

DATA REGENERATING AND CLOCK RECOVERING CIRCUIT — 14 → DATA → CLOCK

EP 1 315 317 A2

# FIG.18

EP 1 315 317 A2

# FIG.19

EP 1 315 317 A2

# FIG.20

**107** OPTICAL INPUT CUTOFF DETERMINATION CIRCUIT

Vth

**106** — +

OPTICAL CUTOFF ALARM SIGNAL

**105** PEAK DETECTION UNIT

Rf

**101**

**102**

**103**

**104** DATA REGENERATING AND CLOCK RECOVERING CIRCUIT

DATA

CLOCK

EP 1 315 317 A2

# FIG.21

POWER OF INPUT
OPTICAL SIGNAL: LARGE

POWER OF INPUT
OPTICAL SIGNAL: SMALL

VOLTAGE

TIME OF CUTOFF
OF OPTICAL INPUT

OUTPUT VOLTAGE
OF PEAK DETECTOR

Vth (CONSTANT)

t1

t2

TIME

EP 1 315 317 A2